# EUROPEAN PATENT APPLICATION

(11) **EP 1 243 377 A2**
(43) Date of publication of application: **25.09.2002**
(21) Application number: 01116239.3
(22) Date of filing: 04.07.2001
(51) Int. Cl.: B23Q 1/62, B23Q 3/155

(54) **Lathe equipped with automatic tool changer**

(30) Priority: 21.03.2001 JP 2001080111
(71) Applicant: Big Alpha Co., Ltd., Goshikicho Tuna-gun, Hyogo (JP)
(72) Inventor: Komine, Tsuyoshi, c/o Big Alpha Co., Inc., Tuna-gun, Hyogo 656-2400 (JP)
(74) Representative: Grünecker, Kinkeldey, Stockmair & Schwanhäusser Anwaltssozietät

(57) **Abstract**

The present invention provides an automatic-tool-changer-equipped lathe which has excellent rigidity for holding tools, which causes no interference between a tool and a work, and which has no limitation on the number of changeable tools. The lathe has: a slide 15 relatively movable in the X and Z axis directions relative to a work head 12; a tool-rest 18 provided on the slide 15 for holding a tool; and a tool changer 20 for storing a plurality of tools and indexing each of the tools at a tool changing position. The tool-rest 18 can turn on the X-Z plane and comprises one tool spindle 19 acting as a tool insert part. The tool spindle 19 is secured to the tool-rest 18.

## Description

### BACKGROUND OF THE INVENTION

### Field of the Invention

The present invention relates to a lathe with an automatic tool changer capable of automatically changing tools.

### Description of the Related Art

As examples of a conventional tool-rest provided on a lathe having an automatic tool changer for automatically changing tools, there is a comb type, a turret type, and a combination type which can be applied to both fixed tools and rotating tools.

The comb type and the turret type tool-rests have the advantage of high rigidity for holding tools, thereby making it possible to cut a large amount of works. Examples of automatic-tool-changer-equipped lathes that have the tool-rest of the comb type or the turret type are disclosed in the Japanese Patent Laid-Open (Kokai) Publication No. HEI 6-91469 and the Japanese Patent Laid-Open (Kokai) Publication No. HEI 7-185985.

With an automatic-tool-changer-equipped lathe that has a tool-rest of the combination type, it is possible to perform, in one chucking, several kinds of processing such as turning operation, drilling, chamfering, or grinding. As opposed to the tool-rests of the comb type or the turret type, the number of changeable tools is not limited by the number of tools that can be held by the tool-rest. Examples of the automatic-tool-changer-equipped lathe having the tool-rest of the combination type are disclosed in the Japanese Patent Laid-Open (Kokai) Publication No. HEI 6-126571 and the Japanese Patent Laid-Open (Kokai) Publication No. HEI 11-138374.

However, concerning the automatic-tool-changer-equipped lathe having the tool-rest of the comb type or the turret type, the number of changeable tools is determined by the number of tools which can be held by the tool-rest. Moreover, since the hold position of the tool-rest is determined by the tool to be set on the tool-rest, automatic operation of the automatic-tool-changer-equipped lathe is limited. In order to increase the number of tools which can be held by the tool-rest of the comb type or the turret type, the automatic tool changer needs to be of such size and weight that it can accommodate the required number of tools. Accordingly, as the automatic-tool-changer-equipped lathe becomes larger, power consumption increases with regard to the movements in the X axis direction and the Z axis direction, thereby causing a possibility that rapid moving speeds for positioning may be limited.

The automatic-tool-changer-equipped lathe having the tool-rest of the combination type is structured in such a manner that the tool spindle is rotatable on the tool-rest. Therefore, such lathe exhibits low cutting rigidity and limitations are imposed on the removal of works.

### SUMMARY OF THE INVENTION

The present invention is devised to improve such conventional automatic-tool-changer-equipped lathes. It is an object of this invention to provide an automatic-tool-changer-equipped lathe which exhibits excellent rigidity for holding tools; which causes no interference between a tool and a work; and which has no limitation on the number of tools that can be changed.

In order to achieve the above-described object, this invention provides an automatic-tool-changer-equipped lathe having: a slide relatively movable in the X and Z axis directions relative to a work head; a tool-rest provided on the slide for holding a tool; and a tool changer for storing a plurality of tools and indexing each of the tools at a tool changing position; wherein the tool-rest can turn on the X-Z plane and comprises one tool spindle acting as a tool insert part, and wherein the tool spindle is secured to the tool-rest.

Concerning the automatic-tool-changer-equipped lathe having the above-described structure, the tool spindle is secured to the tool-rest and, therefore, the tool spindle never rotates on the tool-rest. Accordingly, as compared to the tool-rest of the combination type, it is possible to improve the rigidity for holding tools. As opposed to the tool-rests of the comb type or the turret type, the number of changeable tools is not limited by the number of tools that can be held by the tool-rest, thereby enabling automatic operation for extended periods of time. Moreover, since the tool-rest can turn on the X-Z plane, it is possible to prevent any interference between the tool and a work.

The tool changer can be structured in such a manner that it can be separated from the tool-rest at least when the tool-rest is turning. This structure causes no interference with the tool changer when the tool-rest turns.

Specifically, the tool changer can be positioned separately from the tool-rest and on the side opposite to the work head, relative to the tool-rest. Alternatively, the tool changer can be situated in a movable manner, and the tool changer can be separated from the tool-rest by moving the tool changer.

The tool spindle can be tapered.

Moreover, the automatic-tool-changer-equipped lathe of this invention can further comprise a coupling for indexing the turning of the tool-rest.

The coupling comprises a first coupling located at the slide, and a second coupling located at the tool-rest, and it is possible to index the turning of the tool-rest by engaging the first coupling with the second coupling.

Moreover, a structure can be employed so that either the first coupling or the second coupling is secured and the other coupling is movable. When the movable coupling moves and thereby releases the engagement of the two couplings, the tool-rest turns. When the tool-rest turns to a specified position, the movable coupling is moved to engage with the secured coupling, thereby indexing the turning of the tool-rest.

The automatic-tool-changer-equipped lathe of this invention can comprise a plurality of work heads. In this case, at least one of the plurality of work heads can be located in such a manner that it can move relative to the tool-rest.

Moreover, the automatic-tool-changer-equipped lathe of this invention can comprise two work heads: one work head being securely fastened and the other work head being situated movably in the Z axis direction.

Either one of the work heads can function as a tail stock.

### BRIEF DESCRIPTION OF THE DRAWINGS

Fig. 1 is a perspective view of the automatic-tool-changer-equipped lathe of this invention.
Fig. 2 is a sectional view of a part of the automatic-tool-changer-equipped lathe of Fig. 1 in the vicinity of its tool-rest.
Fig. 3 is an enlarged perspective view of a part of the automatic-tool-changer-equipped lathe of Fig. 1 in the vicinity of its tool-rest.
Fig. 4 is a diagram illustrative of the tool-rest shown in Fig. 3, which depicts one example of tool-rest position after it has been turned further.
Fig. 5 is an enlarged perspective view of a part of a conventional automatic-tool-changer-equipped lathe in the vicinity of its tool-rest.

### DETAILED DESCRIPTION OF THE PREFERRED EMBODIMENT

The automatic-tool-changer-equipped lathe according to a preferred embodiment of this invention is hereinafter explained with reference to the attached drawings.

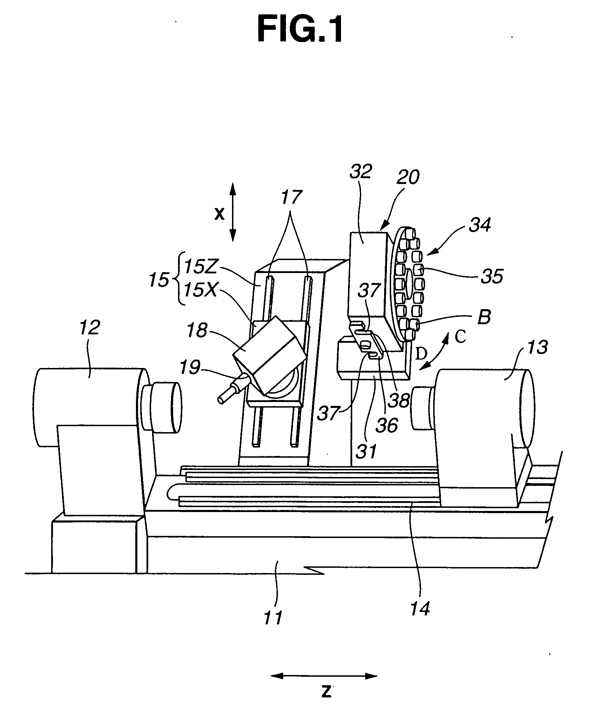

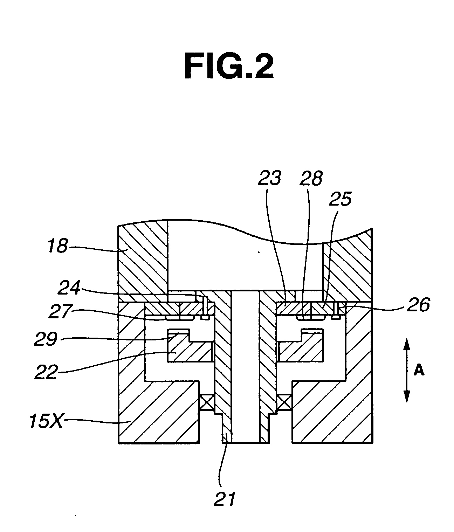

Fig. 1 is a perspective view of the automatic-tool-changer-equipped lathe of this invention. Fig. 2 is a sectional view of the automatic-tool-changer-equipped lathe of Fig. 1 as taken in the vicinity of its tool-rest.

As shown in Figs. 1 and 2, an automatic-tool-changer-equipped lathe 1 according to an embodiment of this invention is structured by comprising: a work head 12 provided on a bed 11, a tail stock 13 provided movably on the bed 11, a slide 15 provided movably along the bed 11, a tool-rest 18 provided on the slide 15, and a tool changer 20 for storing a plurality of tools and for indexing each of the stored tools at a tool changing position.

The tail stock 13 engages with slide rails 14 provided on the bed 11 and is movable in the Z axis direction (the direction shown with arrow Z in Fig. 1).

The slide 15 engages with another slide rail (not shown in Fig. 1) provided on the back side of the slide rails 14 and is structured by comprising a first slide 15Z capable of moving in the Z axis direction and a second slide 15X capable of moving in the X axis direction (shown with arrow X in Fig. 1) by engaging with two slide rails 17 formed on a sloped surface of the first slide 15Z.

The tool-rest 18 is mounted on the second slide 15X in such a manner that the tool rest 18 can turn on the X-Z plane. Specifically, as shown in Fig. 2, this tool-rest 18 is mounted on the second slide 15X by means of a pivot 21 so that the tool-rest 18 can turn.

This pivot 21 is coaxially provided with a first coupling 22 capable of moving in the direction shown with arrow A in Fig. 2. On the top face of the first coupling 22, radial teeth 29 are formed. At the pivot 21, a third coupling 23 is coaxially secured with a bolt 24. Around the perimeter of the third coupling 23, a second coupling 25 is located for surrounding the third coupling 23. This second coupling 25 is secured with a bolt 26 to a housing 16 of the tool-rest 18. On the bottom faces of the second coupling 25 and the third coupling 23, radial teeth 27 and 28 are respectively formed. In other words, in this embodiment, a three-piece coupling made of three couplings (the first coupling 22, the second coupling 25, and the third coupling 23) is used to index the turning of the tool-rest 18.

The turning of the tool-rest 18 matches, in a radial direction, the teeth 27 formed on the bottom face of the second coupling 25 to the teeth 28 formed on the bottom face of the third coupling 23. When the first coupling 22 coaxially provided at the pivot 21 is then moved upward, the radial teeth 29 formed on the top face of the first coupling 22 engage with the teeth 27 and 28, thereby locking the pivot 21 with the second slide 15X.

The tool-rest 18 comprises one tool spindle 19 acting as a tool insert part. This tool spindle 19 is integrally secured to the tool-rest 18, is tapered, and performs lathe turning by holding a tool. Since the tool spindle 19 never rotates on the tool-rest 18, it is possible to improve the rigidity for holding tools.

The tool changer 20 is placed behind the tool-rest 18, that is, on the side opposite to a work head 12, and is separated from the tool-rest 18. This tool changer 20 is structured by comprising a base plate 31 mounted at the rear of the side face of the first slide 15Z, a support column 32 provided on the base plate 31, a tool magazine 34 placed on the support column 32, and a tool changing arm 36 provided on the support column 32.

The tool magazine 34 comprises a plurality of tool holding pots 35 placed in a circle. The tool holding pot 35 is made of a tapered element and has a holding mechanism such as a ball lock mechanism so that the tool holding pot 35 can hold a tool within its taper. The tool holding pots 35 situated around the perimeter of the tool magazine 34 can rotate as a whole in the circumferential direction. It is also possible to index each tool holding pot 35 at a specified tool changing position B. The tool holding pot 35 can be rocked in the direction as shown with arrow C-D so that the shaft center of the tool holding pot 35 at the tool changing position B becomes parallel with a support shaft 38 of the tool changing arm 36 as described below.

The tool changing arm 36 comprises, at its both ends, tool holding parts 37 for holding tools. The support shaft 38 provided on the side face of the support column 32 on the bed 11 side enables the tool changing arm 36 to move back and forth in its axial direction, and the tool changing arm 36 is supported in a manner rotatable on the axis of the support shaft 38.

Specific actions of the automatic-tool-changer-equipped lathe 1 according to this embodiment are described below.

During the processing of a work by using the automatic-tool-changer-equipped lathe 1, in order to change the tool which is being placed to another tool to be used next, the tool-rest 18 is first caused to turn in a desired direction on the X-Z plane to make the shaft core of the present tool parallel with the shaft core of the support shaft 38 of the tool changer 20 and to cause the cutting edge of the tool to face the bed 11 side, while the second slide 15X is activated to move the tool spindle 19 to the tool changing position. With regard to the tool changer 20, while the processing is performed with the present tool, the tool holding pot 35 holding the next tool is indexed at the tool changing position B and is then tilted in the direction shown with arrow D.

The turning of the tool-rest 18 causes the first coupling 22 to move downward and to be separated from the second coupling 25 and the third coupling 23, thereby enabling the pivot 21 to rotate. Subsequently, the tool-rest 18 is driven by a motor to rotate in a desired direction. When the tool-rest 18 turns to a desired position, the first coupling 22 is moved upward. By then, the teeth 27 and 28 formed on the bottom faces of the second coupling 25 and the third coupling 23 have been matched in a radial direction. As the first coupling 22 is moved upward, the radial teeth 29 formed on the top face thereof engage with the teeth 27 and 28, thereby locking the pivot 21 with the second slide 15X and causing the tool-rest 18 to stop turning. In this way, the turning of the tool-rest 18 is indexed.

Subsequently, the tool changing arm 36 is caused to rotate by a specified angle on the axis of the support shaft 38, thereby causing the tool holding parts 37 to hold the present tool mounted on the tool spindle 19 and the next tool held in the tool holding pot 35. The tool changing arm 36 is then caused to advance in the axial direction of the support shaft 38 to pull out the present tool mounted on the tool spindle 19 and the next tool held in the tool holding pot 38 respectively. After the tool changing arm 36 is rotated to a specified angle, it is moved back to mount the next tool on the tool spindle 19 and to place the present tool in the tool holding pot 35. Then, the tool changing arm 36 is rotated in the reverse direction to return to the original position.

As described above, the tool mounted on the tool spindle 19 can be changed to a new tool and from that moment it is possible to perform the next processing of a work with the new tool mounted on the tool spindle 19. Moreover, the tool mounted on the tool spindle 19 can be changed to a spare tool by similar actions of the automatic-tool-changer-equipped lathe 1.

As stated above, with the automatic-tool-changer equipped lathe 1 according to this embodiment, the tool spindle 19 comprises one tool insert part and is secured to the tool-rest 18, thereby realizing the excellent rigidity for holding tools. Moreover, since neither the comb type nor the turret type tool-rest is used as the tool-rest 18, upsizing or weight increase of the lathe is not required. It is possible to increase the number of changeable tools up to the number of tools which the tool magazine 34 can accommodate, and to carry out automatic operation for extended periods of time.

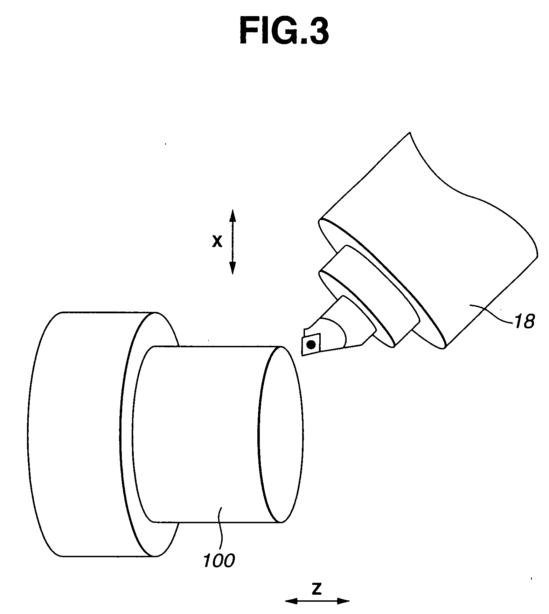

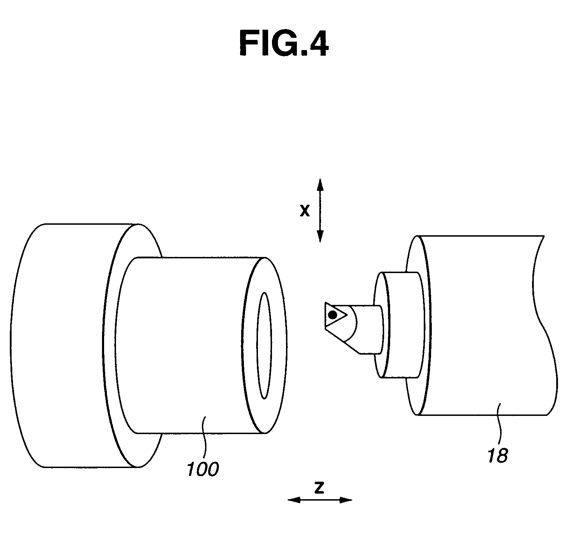

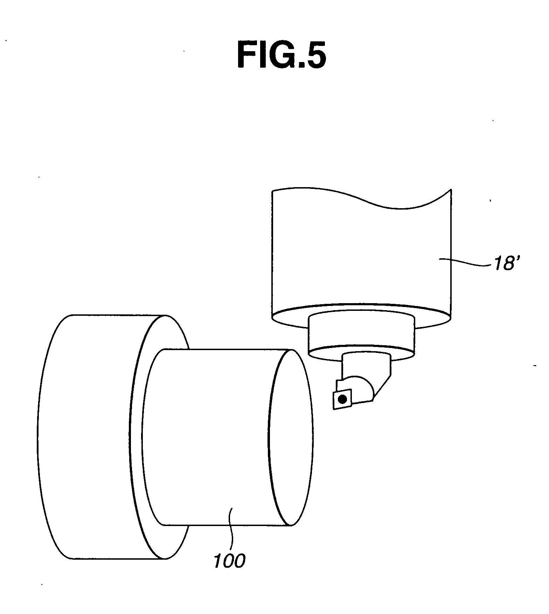

Moreover, since the tool-rest 18 can turn on the X-Z plane, it is possible to prevent any interference with a work 100 as shown in Figs. 3 and 4. In other words, if the tool-rest 18 cannot turn on the X-Z plane, the work 100 interferes with the tool-rest 18' as shown in Fig. 5.

Furthermore, the tool changer 20 is located at the rear of the tool-rest 18 and is separated from the tool-rest 18. Accordingly, when the tool-rest 18 turns, it never interferes with the tool changer 20. Therefore, it is possible to quickly change the tool.

Regarding this embodiment, the above explanations are given in the case where the tool changer 20 is located at the rear of (or behind) the tool-rest 18 and is separated from the tool-rest 18. However, without limitation to such structure, for example, the base plate 31 may be provided with slide rails or the like so that when the tool-rest 18 turns, the support column 32 moves in the Z axis direction, thereby preventing the tool-rest 18 from interfering with the tool changer 20.

Moreover, this embodiment employs such structure that the second coupling 25 placed at the tool-rest 18 is secured and the first coupling 22 placed at the second slide 15X (at the pivot 21) is movable. However, without limitation to such structure, the coupling placed at the tool-rest 18 may be made movable and the coupling placed at the second slide 15X (at the pivot 21) may be secured.

Furthermore, the tail stock 13 of this embodiment may be a second work head. Also, the work head 12 may be movable in the Z axis direction.

As described above, with the automatic-tool-changer-equipped lathe of this invention, the tool-rest can turn on the X-Z plane and comprises one tool spindle acting as a tool insert part, and the tool spindle is secured to the tool-rest and, therefore, never rotates on the tool-rest. Accordingly, as compared to the tool-rest of the combination type, it is possible to improve the rigidity for holding tools. Moreover, as opposed to the tool-rest of the comb type or the turret type, the number of changeable tools is not limited by the number of tools that can be held by the tool-rest, thereby enabling automatic operation for extended periods of time. Furthermore, since the tool-rest can turn on the X-Z plane, it is possible to prevent any interference between the tool and the work, thereby achieving speedups and labor savings.

## Claims

1. An automatic-tool-changer-equipped lathe comprising an automatic tool changer for automatically changing tools, the lathe having:
a work head;
a slide relatively movable in the X and Z axis directions relative to the work head;
a tool-rest provided on the slide for holding a tool; and
a tool changer for storing a plurality of tools and indexing each of the tools at a tool changing position;
wherein the tool-rest can turn on the X-Z plane and comprises one tool spindle as a tool insert part, and
wherein the tool spindle is secured to the tool-rest.

2. An automatic-tool-changer-equipped lathe according to claim 1, wherein the tool changer can be separated from the tool-rest at least when the tool-rest is turning.

3. An automatic-tool-changer-equipped lathe according to claim 2, wherein the tool changer is separated from the tool-rest and is located on the side opposite to the work head relative to the tool-rest.

4. An automatic-tool-changer-equipped lathe according to claim 2, wherein the tool changer is located in a movable manner, and the tool changer is separated from the tool-rest by moving the tool changer.

5. An automatic-tool-changer-equipped lathe according to claim 1, wherein the tool spindle is tapered.

6. An automatic-tool-changer-equipped lathe according to claim 1, further comprising a coupling for indexing the turning of the tool-rest.

7. An automatic-tool-changer-equipped lathe according to claim 6, wherein the coupling comprises a first coupling located at the slide and a second coupling located at the tool-rest and indexes the turning of the tool-rest by causing the first coupling to engage with the second coupling.

8. An automatic-tool-changer-equipped lathe according to claim 7, wherein such a structure is employed that either the first coupling or the second coupling is secured and the other coupling is movable,
wherein when the movable coupling moves and thereby releases the engagement of the two couplings, the tool-rest turns and
wherein when the tool-rest turns to a specified position, the movable coupling is moved to engage with the secured coupling, thereby indexing the turning of the tool-rest.

9. An automatic-tool-changer-equipped lathe according to claim 1, comprising a plurality of work heads.

10. An automatic-tool-changer-equipped lathe according to claim 9, wherein at least one of the plurality of work heads is movable relative to the tool-rest.

11. An automatic-tool-changer-equipped lathe according to claim 9, comprising two work heads, one work head being securely fastened and the other work head being situated movably in the Z axis direction.

12. An automatic-tool-changer-equipped lathe according to claim 11, wherein either one of the work heads is a tail stock.
